(19) Europäisches Patentamt
European Patent Office
Office européen des brevets

(11) **EP 3 334 230 A1**

(12) **EUROPEAN PATENT APPLICATION**

(43) Date of publication:
**13.06.2018 Bulletin 2018/24**

(51) Int Cl.:
**H04W 72/04** (2009.01)    **H04W 72/08** (2009.01)
**H04W 84/12** (2009.01)

(21) Application number: **16306656.6**

(22) Date of filing: **12.12.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Alcatel Lucent
91620 Nozay (FR)**

(72) Inventors:
• **ABOU SALEH, Ahmad
2018 Antwerpen (BE)**
• **GACANIN, Haris
2018 Antwerpen (BE)**

(74) Representative: **Nokia Bell Patent Attorneys
Copernicuslaan 50
2018 Antwerp (BE)**

(54) **BAND STEERING METHOD AND MANAGEMENT SYSTEM**

(57)    A band steering management system and method is provided. The band steering management system is enabled to operate in a dual-band wifi deployment environment that comprises at least an access point and a station being configured to communicate with each other over any of two respective wifi-bands. The management system comprises:
- a best channel selector configured to select a best channel for each of the wifi-bands; and
- a wifi strength determiner configured to determine a wifi-signal strength between the access point and the station for each best channel; and
- a channel throughput determiner configured to determine a channel throughput for each one of the best channels; and
- a threshold determiner configured to determine a channel throughput threshold in function of a required service; and
- a band selector configured to select according to predetermined rule and conditions and in function of the respective channel throughput, the respective wifi signal strength and the channel throughput threshold, a selected band out of the two respective wifi-bands; and
-an executor configured to execute an allocation of the selected band towards the station for communication with the access point.

Figure 1

**Description**

The present invention relates to a band steering method and a band steering management system.

Band steering is a known understanding in the art.

Wifi gateways or also called access points are having dual band capabilities: 2.4 and 5.0 GHz bands. In order to improve the service quality of end user devices, hereafter called stations, band steering is possible. Currently, the band steering is decided such as "connect to the strongest signal irrespective of the band".

A generic method of a band steering algorithm is to identify by an access point dual-band client stations from their probe requests and then preferentially respond to them only on the 5 GHz band, so that stations do not see the 2.4 GHz network and will connect to the 5 GHz network. Since client stations use the same MAC address on both the 2.4 GHz and 5 GHz bands, it's possible for an access point to identify dual-band capable client devices.

In order to function properly, band steering generally assumes that the coverage areas on both the 2.4 GHz bands and 5 GHz bands are the same, or at least roughly equivalent. However, problems will occur if the coverage on 5 GHz is significantly weaker and has coverage holes, as compared to coverage for 2.4 GHz. Indeed, with a "force 5 GHz connections" band steering mode a dual-band client station is only allowed to connect to the network on the 5 GHz band, and any requests to connect on the 2.4 GHz band is ignored. This mode works quite well when the signal strength is good on the 5 GHz band, but it becomes problematic if there are weak coverage areas on 5 GHz because the network will not allow the client device to "fall back" to the 2.4 GHz network.

Another band steering mode is "prefer 5 GHz connections". This mode involves specifying a threshold received signal strength indicator RSSI such that so long as the client device has an RSSI value above the threshold, the access point will preferentially encourage the client device to connect on the 5 GHz band. In the event when the 5 GHz RSSI dips below the threshold, the client device will be allowed on the 2.4 GHz band. With this band steering mode an appropriate RSSI threshold needs to be selected. In the event when the threshold is set too high, devices that really should be connecting on the 5 GHz band are actually connecting at 2.4 GHz. In the event when the threshold is set too low, devices may be getting relatively poor performance on the 5 GHz band when they would get better performance on the 2.4 GHz band.

Another band steering mode is "load-balance connections". In environments with a high density of client devices, it may be advantageous to balance connections between the 2.4 GHz and 5 GHz bands. Such a mode usually allows the specification of a load-balancing threshold and/or percentage of clients to allow on the 5 GHz band versus the 2.4 GHz band.

So, it is clear that know band selection methods are based on different criteria's such as e.g. selecting the band with lower interference; using data traffic at the Access Point level together with interference metric; or using interference in combination with data rate, traffic type and user mobility.

These known methods are however not providing a satisfying selection and moreover in the event when the wifi chips at the access point and the station are not complementary from the same vendor, the access point is not able to provide a suitable suggestion towards the station.

An object of the present invention is to provide a band steering method and band steering management device such as the above known types but with an improved kind of selection and active steering of the station.

According to the invention, this object is achieved due to the fact that the band steering method for execution by the band steering management system in a dual-band wifi deployment environment that comprises at least an access point and a station being configured to communicate with each other over any of two respective wifi-bands comprises:

-    selecting by means of a best channel selector a best channel for each of the wifi-bands; and
-    determining by means of a wifi strength determiner a wifi-signal strength between the access point and the station for each best channel; and
-    determining by means of a channel throughput determiner a channel throughput for each best channel.

Furthermore, the band steering method comprises

-    determining by means of a threshold determiner a channel throughput threshold in function of a required service; and
-    selecting by means of a band selector according to predetermined rule and conditions and in function of the respective channel throughput, the respective wifi signal strength and the channel throughput threshold a selected band out of the two respective wifi-bands; and
-    executing by means of an executor an allocation of the selected band to the station for communication with the access point. This is described in the method of claim 1 and the management system of claim 6.

The basic idea is selecting by a band steering management system the best band based on comparison of throughput versus a throughput threshold and comparison of wifi network coverage and by executing an allocation of the selected band towards the station for use during its communication with the access point.

The throughput threshold is defined based upon the required Quality of Service or can alternatively be based on the kind of service being provided by the operators.

The channel utilization is used as a main metric for the resource sharing and has a high effect on the throughput. So, in a further embodiment which is described in the method of claim 2 and the management system of claim 7 the throughput is determined. The throughput determiner comprises

- an interference determiner configured to determine interference for each best channel; and
- a noise determiner configured to determine a noise value for each best channel; and
- a calculator configured to calculate a signal-to-interference-plus-noise value for each best channel in function of its respective signal strength, its respective interference and its respective noise value; and
- a channel utilization determiner configured to determine a channel utilization for each best channel and to calculate airtime availability for each best channel in function of the channel utilization;
- a bandwidth determiner configured to determine an available bandwidth between the access point and the station; and
- a gap determiner configured to determine a gap value in function of the applicable modulation; and
- a throughput calculator configured to calculate the channel throughput for each best channel in function of its respective airtime use, the bandwidth, its respective signal-to-interference-plus-noise value and the gap value.

It has to be noted that the airtime availability is a potential metric for the percentage of time that the access point can get hold of the medium.

Furthermore, it has to be noted that the determined interference can induced by neighboring access points or other non-wifi devices.

A further embodiment of the actual method and management system is described in claims 3 and 8 where the predetermined rules and conditions comprises, in the event when one or both of the respective channel throughputs is lower as the throughput threshold, the wifi-band associated to the best channel that has the highest throughput is selected as the selected band.

However, in the situation when both bands do have a throughput that is higher than the predefined throughput threshold the wifi signal strength level is checked in order to enable the final selection.

This is described in the method of claim 4 and the management system of claim 9 where in the in the event when both of the respective channel throughputs are higher than the throughput threshold, the predetermined rules and conditions further comprises

in the event when one first of the best channels has a higher channel throughput over the other second one, but the other second one has a higher wifi signal strength over the first one, the associated wifi-band of the second other one is selected as the selected band.

A final embodiment of the band steering management system and method is described in claim 10 where the band selector (SEL-Bs) is further configured to introduce a penalty in order to benefit the respective wifi signal strength of one of the best channels over the other one during execution of the predetermined rules and conditions. This penalty is introduced since many modern networks are still designed from a 2.4 GHz mentality and do not account for the fact that 5 GHz signals have significantly higher attenuation than a 2.4 GHz signal from the same access point at the same power level.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

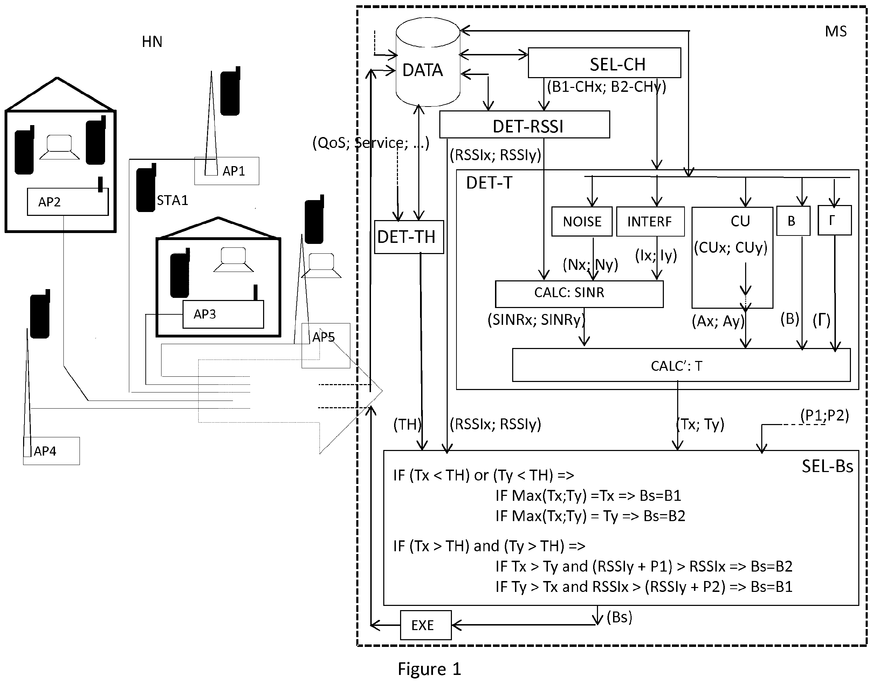

The above and other objects and features of the invention will become more apparent and the invention itself will be best understood by referring to the following description of an embodiment taken in conjunction with the accompanying drawings wherein Figure 1 represents a dual-wifi deployment environment and Figure 2 shows a diagram that explains the importance of channel throughput and coverage.

The working of the device according to the present invention in accordance with its telecommunication environment that is shown in Figure 1 will be explained by means of a functional description of the different blocks shown therein. Based on this description, the practical implementation of the blocks will be obvious to a person skilled in the art and will therefor not be described in further details. In addition, the principle working of the method of band steering will be described in further detail.

Figure 1 shows a telecommunication environment HN with a wifi deployment environment with different access points AP1, AP2, AP3, AP4 and AP5 not limited hereto, and different end-user terminals, called herein stations such as STA1 near Access Point AP1. The AP1 and a station STA1 are both configured to enable communication with each other over any of two respective wifi-bands. These bands are generalized hereafter B1 and B2.

As an example B1 might be implemented with the wifi- band of 2.4 Ghz and B2 might be implemented with the wifi-band 5 Ghz.

Figure 1 further comprises a management system MS that is coupled to the telecommunication environment HN.

The management system MS comprises:

- a data collector DATA connected via an input/output interface of the management system to the wifi deployment environment i.e. including and connected to the above mentioned network elements AP1, AP2, AP3, AP4, AP5 and STA1; and
- a best channel selector SEL-CH connected to the data collector DATA; and
- a wifi strength determiner DET-RSSI connected to the data collector; and
- a channel throughput determiner DET-T connected to the wifi strength determiner DET-RSSI, the best channel selector SEL-CH and the data collector DATA; and
- a threshold determiner DET-TH connected to the data collector DATA; and
- a band selector SEL-Bs connected to the channel throughput determiner DET-T, the wifi strength determiner and the threshold determiner DET-TH; and
- an executor EXE connected to the band selector SEL-Bs and via an output interface to the access point STA1.

The channel throughput determiner DET-T further comprises:

- an interference determiner INTERF connected to the data collector; and
- a noise determiner NOISE configured to the data collector DATA; and
- a calculator CALC:SINR connected to the wifi strength determiner DET-RSSI, the noise determiner NOISE and the interference determiner INTERF; and
- a channel utilization determiner CU connected to the data collector DATA; and
- a bandwidth determiner B connected to the data collector DATA; and
- a gap determiner $\Gamma$ connected to the data collector DATA; and
- a channel throughput calculator CACL': T connected to the channel utilization determiner CU; and bandwidth determiner B; the gap determiner $\Gamma$, the calculator CAL: SINR and the band selector SEL-Bs.

The data collector DATA is configured to collect data from the home environment HN. Among the collected data the following measurements are mentioned:

- the signal strength RSSI which is the relative received signal strength in a wireless environment, in arbitrary units. The signal strength RSSI is strength of the power level from the access point to the user device. RSSI is an indication of the power level being received by the receive radio after the antenna and possible cable loss i.e. the power of the incoming signal of interest. Therefore, the higher the RSSI number, the stronger the signal; and
- the interference power I which is the power of the other (interfering) signals in the network. Note that the interference I can come from neighbouring access pints or other non-wifi devices; and
- the channel utilization CU or also called the channel efficiency, also known as bandwidth utilization efficiency. Channel utilization CU is related to the use of the channel disregarding the throughput. It counts not only with the data bits but also with the overhead that makes use of the channel. The transmission overhead consists of preamble sequences, frame headers and acknowledge packets. So, the channel utilization is the time in percentage the access point is busy.

In this way global data is collected by the data collector DATA from the different access points such as e.g. AP1 and from the different stations such as e.g. STA1 in the network.

The best channel selector SEL-CH is configured to select a best channel for each of the wifi-bands: B1-CHx and B2-CHy. This best channel collection can be performed by means of different kind of algorithms. This algorithm can be run at an access point e.g. AP1 itself whereby the best channel is merely forwarded towards the data collector and the best channel selector or the algorithm is performed by best channel selector SEL-CH. The aim of the algorithm is to find within each of the bands B1 and B2 a channel that would be assigned for use within that respective band in the event of performing the communication over that band. In this way the best channel that is selected for B1 is channel x named B1-CHx and for B2 is channel y named B2-CHy.

The wifi strength determiner DET-RSSI is configured to determine a wifi-signal strength between the access point AP1 and the station STA1 for each best channel. For the channel B1-CHx the wifi strength determiner determines based upon the collected date in the data collector a wifi strength that equals to a value RSSIx. For the channel B2-CHy the wifi strength determiner determines based upon the collected date in the data collector a wifi strength that equals to a value RSSIy.

The channel throughput determiner DET-T is configured to determine a channel throughput for each of the best channels B1-CHx and B2-CHy. The further details of the channel throughput determiner DET-T will be given here below.

The threshold determiner DET-TH is configured to determine a channel throughput threshold TH in function of a required service. Based upon the different services required by the station STA1 or by the different Quality of Service required for the stations STA1, different kind of throughput thresholds are determined by e.g. the operator. In order to determine this Threshold T the data of the data collector is used (see link between the two functional blocks) but also the required service and QoS is provided to the threshold determiner DET-TH. This is shown by means of a dotted line.

The band selector SEL-Bs is configured to select according to predetermined rule and conditions and in function of the respective channel throughput (Tx, Ty), the respective wifi signal strength (RSSIx; RSSIy) and the channel throughput threshold TH a selected band Bs out of the two respective wifi-bands B1 or B2.

The predetermined rules and conditions are reflecting the use of the channel throughput T i.e. in fact the channel utilization as a main metric for resource sharing. The high effect of the channel utilization on the throughput will be described hereafter. Another metric which has an effect on the throughput T is the signal-to-interference SINR and the and noise ratio N which are both related to the signal strength RSSI, noise N and interference level I from hidden nodes and overlapping channels. They have a direct effect on the packets retransmission and hence on the throughput T.

A possible implementation of the predetermined rules and conditions will be described here further on.

The executor EXE is configured to execute an allocation of the selected band Bs to the station STA1 for communication with the access point AP1. This means that the executor EXE forwards the selected bandwidth Bs, being either B1 or B2, in a communication message towards the stations STA1. The recommendation message about the selection of the best band can be provided to the user device station STA1 via sms, email or application based.

The channel throughput determiner DET-T will now be further described and explained.

The interference determiner INTERF is configured to determine interference Ix and Iy for each respective best channel B-CHx and B-CHy. As mentioned above, the Interference is collected by the Management System and (temporarily) stored in the data collector DATA. The measured interference can be from neighbouring access points or from other non-wifi devices. Interference is fetched for the respective best channel from the data collector DATA.

The noise determiner NOISE is configured to determine a noise value Nx and Ny for each best channel. It has to be explained that the noise term can be a constant or random value. This value is predetermined by e.g. the operator and is stored in the data base of the data collector DATA and is fetched from it by the noise determiner NOISE for both best channels.

The calculator CALC:SINR is configured to calculate a signal-to-interference-plus-noise value for each best channel in function of the respective signal strengths (RSSIx; RSSIy), the respective interference (Ix; Iy) and the respective noise value (Nx; Ny). The calculator CALC:SINR generates the respective signal-to-interference-plus-noise value SINRx and SINRy for each best channel. The calculation is based twice upon the following formulae:

$$SINRx = \frac{RSSIx}{Ix + Nx} \quad \text{and} \quad SINRy = \frac{RSSIy}{Iy + Ny}$$

The channel utilization determiner CU is configured to determine a channel utilization for each best channel and to calculate airtime use for each best channel in function of the channel utilization. As mentioned above, the channel utilization CUx and CUy is measured and predetermined by the management system MS and stored in the data collector DATA. The channel utilization determiner CU fetches the respective percentage values from the data collector DATA for each best channel and calculates the airtime Ax and Ay for each best channel. The airtime availability for an access point is a potential metric for the percentage of time the access point can get hold of the medium.

The airtime calculation is based twice upon the following formulae:

$$Ax = 1 - CUx \quad \text{and} \quad Ay = 1 - CUy$$

The bandwidth determiner B is configured to determine an available bandwidth B between the access point under study e.g. AP1 and the station under study e.g. STA1. The measurement of the bandwidth is also performed by the management system and stored in the data collector DATA for being fetched based for the respective best channel.

Finally gap determiner $\Gamma$ introduces a gap value $\Gamma$ in function of the applicable modulation. The gap $\Gamma$ needs to be introduced due to the use of Quadrature amplitude modulation QAM. This value is stored by the operator in advance in the data collector DATA and is fetched from the database by the gap determiner $\Gamma$.

Finally channel throughput calculator CACL':T is enabled to configure and to calculate the channel throughput T for each best channel based upon the values determined here above i.e. in function of the respective airtime use Ax and Ay; the bandwidth B; the respective signal-to-interference-plus-noise value SINRx and SINRy; and the gap value $\Gamma$.

The calculation is based twice upon the following formulae:

$$Tx = Ax\left( B\log_2\left( 1 + \frac{SINRx}{\Gamma} \right) \right)$$

and

$$Ty = Ay\left( B\log_2\left( 1 + \frac{SINRy}{\Gamma} \right) \right)$$

It is noted that the Shannon capacity formula is multiplied by the airtime availability given by Ax and Ay.

The principle working of the method of band steering will now be described in further detail.

Assuming that the wifi deployment environment is enabled to operate at two bands 2.4 GHz and 5.0 GHz and on a certain channel at each band i.e. channel x at 2.4 GHz and channel y at 5.0 GHz. It is assumed that these channels are the best channels in each band which are selected e.g. based upon a selection algorithm. Hereby the band steering method according to the present inventions comprises step of selecting a best channel for each of the wifi-bands B1-CHx and B2-CHy.

A following step is provided by determining a wifi signal strength, RSSIx and RSSIy, between the access point AP1 and the station STA1 for each best channel. The RSSI signal strength values, RSSIx and RSSIy, respectively, from the access point AP1 and the user device STA1 are measured and collected by the management system in the data collector DATA.

A first main step is determining a throughput T estimation for both bands 2.4 and 5 GHz. The estimate of the achieved throughput is calculated based on the airtime use and the signal-to-interference-plus-noise value SINRx and SINRy. This is achieved by the following steps:

- determining interference, Ix and Iy, for each best channel; and
- determining a noise value, Nx and Ny, for each best channel; and
- calculating a signal-to-interference-plus-noise value, SINRx and SINRy for each best channel in function of the respective signal strength RSSIx; RSSIy, the respective interference Ix; Iy and the respective noise value, Nx and Ny). The applicable formulae is described above; and
- determining a channel utilization, CUx and CUy, for each best channel and calculating airtime use, Ax and Ay, for each best channel in function of the channel utilization; and
- determining an available bandwidth B between the access point AP1 and the said station STA1; and
- determining a gap value $\Gamma$ in function of the applicable QAM modulation; and
- calculating finally the channel throughput, Tx and Ty, for each best channel in function of the respective airtime use, Ax and Ay, the bandwidth B, the respective signal-to-interference-plus-noise value, SINRx and SINRy, and the gap value $\Gamma$ with the above described formulae.

A second main step is implemented by the predetermined rules and conditions whereby the throughput which is determined in the first main step will be compared and the coverage will be assessed.

This global main step comprises:

- determining a channel throughput threshold TH in function of a required service. The threshold is set in function of the Quality of Service that is needed or is set based on the service provided by operators; and

- selecting according to predetermined rule and conditions and in function of the respective channel throughput, Tx and Ty, the respective wifi signal strength, RSSIx and RSSIy, and the channel throughput threshold TH, a selected band Bs out of the two respective WiFi-bands, B1 and B2.

The predetermined rules and conditions are aiming a steering towards the band that has a throughput that is higher than the given threshold.

However, when both channels have a throughput T that is lower than the threshold TH, the one that has the highest throughput will be selected. So the predetermined rules and conditions comprises that in the event when one or both of the respective channel throughputs, Tx and/or Ty, is lower as the throughput threshold TH, selecting the WiFi-band associated to channel that has the highest throughput as the selected band Bs.

In mathematical notation:

$$\text{IF } (Tx < TH) \text{ or } (Ty < TH) =>$$

$$\text{IF } Max(Tx;Ty) = Tx => Bs = B1 \quad \text{the selected band is B1}$$

$$\text{IF } Max(Tx;Ty) = Ty => Bs = B2 \quad \text{the selected band is B2}$$

the selected band is B2

In the event when both channels have a throughput T that is higher than the given threshold TH, the wifi strength level RSSI is checked for both channels B1 -CHX and B2-CHy.

A) In the event when the throughput Ty of the channel of the 5 GHz band is higher than the throughput Tx of the channel of the 2.4 GHz band; and

A.1) in the event when the wifi signal strength RSSIx is bigger or equal to the wifi signal strength RSSIy, the B1 =2.4GHz band is recommended as selected band Bs. In such a situation the better coverage of B1 is favored over only the small throughput Tx.
A.2) Otherwise steering towards the B2=5 GHz=Bs band is recommended.

B) In the event where the throughput Tx of the channel of the 2.4 GHz band is higher than the throughput Ty of the channel of the 5 GHz band; and

B.1) in the event when the wifi signal strength RSSIy is bigger or equal to the wifi signal strength RSSIx, the B2=5 GHz band is recommended as selected band Bs.
B.2) Otherwise steering towards the B1=2.4 Ghz band is recommended.

These above situations can be formulated as follows:

in the event when both of the respective channel throughputs, Tx and Ty, are higher as the throughput threshold TH, and
in the event when one first of the best channels has a higher channel throughput over the other second one, and the other second one has a higher Wi-Fi signal strength over the first one, the associated WiFi-band of the second other one is selected for the selected band Bs.

In mathematical notation:

$$\text{IF } (Tx > TH) \text{ and } (Ty > TH) =>$$

$$\text{IF } Tx > Ty \text{ and } RSSIy > RSSIx => Bs = B2$$

$$\text{IF } Ty > Tx \text{ and } RSSIx > RSSIy => Bs = B1$$

Finally, the selected best band Bs is recommended and provided towards the user device. This can be done via sms, email or applications-based i.e. executing an allocation of the selected band Bs to the station STA1 for communication with the access point AP1.

A final implementation of the present invention is described with the introduction of a penalty P to give more value to one of the bands B1 or B2 depending on the requirements. The penalty P can be chosen adaptively in order to reflect a gap between the channel utilization for B1 and for B2. In the event of a large gap, a higher penalty P value can be chosen and in the event of a small gap, the value of the penalty P can be decreased.

In this way the method according the present invention of selecting the selected band Bs comprises a step of introducing a penalty, such as P1 and P2, in order to benefit the respective Wi-fi signal strength of one of the best channels over the other one during execution of the predetermined rules and conditions.

The above explained rules and conditions will now be repeated with a value for P1 and P2 being different from zero.

A) In the event when the throughput Ty of the channel of the 5 GHz band is higher than the throughput Tx of the channel of the 2.4 GHz band; and

A.1) in the event when the wifi signal strength RSSIx is bigger or equal to the wifi signal strength (RSSIy+P1), the B1 =2.4GHz band is recommended as selected band Bs. In such a situation the better coverage of B1 is favored over only the small throughput Tx.

A.2) Otherwise steering towards the B2=5 GHz=Bs band is recommended.

B) In the event where the throughput Tx of the channel of the 2.4 GHz band is higher than the throughput Ty of the channel of the 5 GHz band; and

B.1) in the event when the wifi signal strength (RSSIy+P2) is bigger or equal to the wifi signal strength RSSIx, the B2=5 GHz band is recommended as selected band Bs.

B.2) Otherwise steering towards the B1=2.4 Ghz band is recommended.

It has to be noted that for a reasonable choice of P2, this situation is seldom to happen in practice. This is due to the fact that the signal penetration at 2.4GHz band is better than the one on 5 GHz band.

In mathematical notation:

$$\text{IF } (Tx > TH) \text{ and } (Ty > TH) =>$$
$$\text{IF } Tx > Ty \text{ and } (RSSIy + P1) >= RSSIx => Bs = B2$$
$$\text{IF } Ty > Tx \text{ and } RSSIx >= (RSSIy + P2) => Bs = B1$$

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

**Claims**

**1.** A band steering method for use by a management system (MS) in a dual-band wifi deployment environment (HN) comprising at least an access point (AP) and a station (STA) being configured to communicate with each other over any of two respective wifi-bands (B1; B2)
said method comprises the steps of

- selecting (SEL-CH) a best channel for each of said wifi-bands (B1-CHx; B2-CHy); and
- determining (DET-RSSI) a wifi signal strength (RSSIx; RSSIy) between said access point (AP) and said station (STA) for each said best channel; and
- determining (DET-T) a channel throughput (Tx; Ty) for each said best channel,

**characterized in that** said method further comprises

- determining (DET-TH) a channel throughput threshold (TH) in function of a required service; and
- selecting (SEL-Bs) according to predetermined rule and conditions and in function of said respective channel throughput (Tx, Ty), said respective wifi signal strength (RSSIx; RSSIy) and said channel throughput threshold (TH) a selected band (Bs) out of said two respective WiFi-bands (B1; B2); and
- executing (EXE) an allocation of said selected band (Bs) to said station (STA) for communication with said access point (AP).

2.  The method of claim 1 **characterized in that** said step of determining (DET-T) a channel throughput (Tx; Ty) for each said best channel comprises the steps of:

- determining interference (Ix; Iy) for each said best channel; and
- determining a noise value (Nx; Ny) for each said best channel; and
- calculating a signal-to-interference-plus-noise value (SINRx; SINRy) for each said best channel in function of said respective signal strength (RSSIx; RSSIy), said respective interference (Ix; Iy) and said respective noise value (Nx; Ny); and
- determining a channel utilization (CUx; CUy) for each said best channel and calculating airtime use (Ax; Ay) use for each said best channel in function of said channel utilization; and
- determining an available bandwidth (B) between said access point (AP) and said station (STA); and
- determining a gap value ($\Gamma$) in function of the applicable modulation; and
- calculating said channel throughput (Tx; Ty) for each said best channel in function of said respective airtime use (Ax; Ay), said bandwidth (B), said respective signal-to-interference-plus-noise value (SINRx; SINRy) and said gap value ($\Gamma$).

3.  The method of claim 1 **characterized in that** said predetermined rules and conditions comprises, in the event when one or both of said respective channel throughput (Tx; Ty) is lower as said throughput threshold (TH), selecting the WiFi-band associated to the best channel having the highest throughput as the selected band (Bs).

4.  The method of claim 1 **characterized in that** said predetermined rules and conditions further comprises in the event when both of said respective channel throughput (Tx; Ty) are higher as said throughput threshold (TH), and
in the event when one first of said best channels
having a higher channel throughput over the other second one, but said other second one having a higher Wi-Fi signal strength over said first one,
selecting the associated WiFi-band of said second other one as the selected band (Bs).

5.  The method of claim 1 **characterized in that** said step of selecting said selected band (Bs) comprises a step of introducing a penalty (P1; P2) in order to benefit the respective Wi-fi signal strength (RSSIy) of one of said best channel over the other one during execution of said predetermined rules and conditions.

6.  A band steering management system (MS) in a dual-band wifi deployment environment (HN) comprising at least an access point (AP) and a station (STA) being configured to communicate with each other over any of two respective wifi-bands (B1; B2), said management system (MS) comprises:

- a best channel selector (SEL-CH) configured to select a best channel for each of said wifi-bands (B1-CHx; B2-CHy); and
- a wifi strength determiner (DET-RSSI) configured to determine a wifi-signal strength (RSSIx; RSSIy) between said access point (AP) and said station (STA) for each said best channel; and
- a channel throughput determiner (DET-T) configured to determine a channel throughput (Tx; Ty) for each said best channel,

**characterized in that** said band steering management system (MS) further comprises

- a threshold determiner (DET-TH) configured to determine a channel throughput threshold (TH) in function of a required service; and
- a band selector (SEL-Bs) configured to select according to predetermined rule and conditions and in function of said respective channel throughput (Tx, Ty), said respective wifi signal strength (RSSIx; RSSIy) and said channel throughput threshold (TH) a selected band (Bs) out of said two respective wifi-bands (B1; B2); and
- an executor (EXE) configured to execute an allocation of said selected band (Bs) to said station (STA) for communication with said access point (AP).

7. The band steering management system (MS) according to claim 6 **characterized in that** said channel throughput determiner (DET-T) comprises

   - an interference determiner (INTERF) configured to determine interference (Ix; Iy) for each said best channel; and
   - a noise determiner (NOISE) configured to determine a noise value (Nx; Ny) for each said best channel; and
   - a calculator (CALC : SINR) configured to calculate a signal-to-interference-plus-noise value (SINRx; SINRy) for each said best channel in function of said respective signal strength (RSSIx; RSSIy), said respective interference (Ix; Iy) and said respective noise value (Nx; Ny); and
   - a channel utilization determiner (CU) configured to determine a channel utilization (CUx; CUy) for each said best channel and to calculate airtime use (Ax; Ay) use for each said best channel in function of said channel utilization; and
   - a bandwidth determiner (B) configured to determine an available bandwidth (B) between said access point (AP) and said station (STA); and
   - a gap determiner ($\Gamma$) configured to determine a gap value ($\Gamma$) in function of the applicable modulation; and
   - a channel throughput calculator (CACL' : T) configured to calculate said channel throughput (Tx; Ty) for each said best channel in function of said respective airtime use (Ax; Ay), said bandwidth (B), said respective signal-to-interference-plus-noise value (SINRx; SINRy) and said gap value ($\Gamma$).

8. The band steering management system (MS) according to claim 6 **characterized in that** said predetermined rules and conditions comprises,

   in the event when one or both of said respective channel throughput (Tx; Ty) is lower as said throughput threshold (TH), selecting the WiFi-band associated to the best channel having the highest throughput as the selected band (Bs).

9. The band steering management system (MS) according to claim 6 **characterized in that** said predetermined rules and conditions further comprises

   in the event when both of said respective channel throughput (Tx; Ty) are higher as said throughput threshold (TH), and

   in the event when one first of said best channels

   having a higher channel throughput over the other second one, but said other second one having a higher Wi-Fi signal strength over said first one,

   selecting the associated WiFi-band of said second other one as the selected band (Bs).

10. The band steering management system (MS) according to claim 6 **characterized in that** said band selector (SEL-Bs) is configured to introduce a penalty (P) in order to benefit the respective wifi signal strength of one of said best channels over the other one during execution of said predetermined rules and conditions.

11. A computer program comprising software code adapted to perform the method according to claim 1.

12. A computer readable storage medium comprising computer-executable instructions which, when executed by a computing system, perform a method according to claim 1.

Figure 1

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2012/147777 A1 (ARASHIN NOBUHIKO [JP] ET AL) 14 June 2012 (2012-06-14) * paragraphs [0080], [0100], [0112] - [0113], [0125] *<br>----- | 1-12 | INV.<br>H04W72/04<br><br>ADD.<br>H04W72/08 |
| A | WO 2016/081442 A1 (T MOBILE USA INC [US]) 26 May 2016 (2016-05-26) * paragraphs [0022], [0032] - [0040], [0079] - [0082] *<br>----- | 1-12 | H04W84/12 |
| A | US 2015/208416 A1 (CHANDRA ARTY [US]) 23 July 2015 (2015-07-23) * paragraphs [0019] - [0028] *<br>----- | 1-12 | |

TECHNICAL FIELDS
SEARCHED       (IPC)

H04W

The present search report has been drawn up for all claims

| Place of search | Date of completion of the search | Examiner |
|---|---|---|
| The Hague | 9 June 2017 | Schut, Gerhard |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    ...........................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 30 6656

This annex lists the patent family members relating to the patent documents cited in the above-mentioned European search report.
The members are as contained in the European Patent Office EDP file on
The European Patent Office is in no way liable for these particulars which are merely given for the purpose of information.

09-06-2017

| Patent document cited in search report | | Publication date | Patent family member(s) | | Publication date |
|---|---|---|---|---|---|
| US 2012147777 | A1 | 14-06-2012 | CN | 102948240 A | 27-02-2013 |
| | | | CN | 102948241 A | 27-02-2013 |
| | | | EP | 2584856 A1 | 24-04-2013 |
| | | | JP | 5362853 B2 | 11-12-2013 |
| | | | JP | 5796201 B2 | 21-10-2015 |
| | | | US | 2012147777 A1 | 14-06-2012 |
| | | | US | 2012163324 A1 | 28-06-2012 |
| | | | WO | 2011161950 A1 | 29-12-2011 |
| | | | WO | 2011161951 A1 | 29-12-2011 |
| WO 2016081442 | A1 | 26-05-2016 | NONE | | |
| US 2015208416 | A1 | 23-07-2015 | AR | 054434 A1 | 27-06-2007 |
| | | | AU | 2006232217 A1 | 12-10-2006 |
| | | | BR | PI0612324 A2 | 03-11-2010 |
| | | | CA | 2603211 A1 | 12-10-2006 |
| | | | CN | 102123481 A | 13-07-2011 |
| | | | DE | 202006005211 U1 | 07-09-2006 |
| | | | EP | 1867142 A2 | 19-12-2007 |
| | | | GE | P20125611 B | 27-08-2012 |
| | | | HK | 1160326 A1 | 19-08-2016 |
| | | | IL | 186343 A | 30-11-2011 |
| | | | JP | 4754624 B2 | 24-08-2011 |
| | | | JP | 2008535398 A | 28-08-2008 |
| | | | KR | 200420221 Y1 | 29-06-2006 |
| | | | KR | 20060106775 A | 12-10-2006 |
| | | | KR | 20120120488 A | 01-11-2012 |
| | | | KR | 20130023296 A | 07-03-2013 |
| | | | KR | 20130137572 A | 17-12-2013 |
| | | | KR | 20140103891 A | 27-08-2014 |
| | | | MY | 144247 A | 29-08-2011 |
| | | | TW | I433582 B | 01-04-2014 |
| | | | TW | M297103 U | 01-09-2006 |
| | | | TW | 201004456 A | 16-01-2010 |
| | | | TW | 201338611 A | 16-09-2013 |
| | | | TW | 201342977 A | 16-10-2013 |
| | | | US | 2006223574 A1 | 05-10-2006 |
| | | | US | 2010330914 A1 | 30-12-2010 |
| | | | US | 2013051328 A1 | 28-02-2013 |
| | | | US | 2015208416 A1 | 23-07-2015 |
| | | | WO | 2006107698 A2 | 12-10-2006 |

EPO FORM P0459

For more details about this annex : see Official Journal of the European Patent Office, No. 12/82